(19) Europäisches Patentamt
European Patent Office
Office européen des brevets

(11) EP 4 574 521 A1

(12) **EUROPEAN PATENT APPLICATION**

(43) Date of publication:
25.06.2025 Bulletin 2025/26

(21) Application number: 24216611.4

(22) Date of filing: 29.11.2024

(51) International Patent Classification (IPC):
**B60L 3/00** (2019.01)   **B60L 3/04** (2006.01)
**H02H 9/00** (2006.01)

(52) Cooperative Patent Classification (CPC):
**B60L 3/0046; B60L 3/0069; H02H 9/001;**
B60L 2210/10; B60L 2210/14; B60L 2240/547;
B60L 2270/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.12.2023 CN 202311768788

(71) Applicant: **Nio Technology (Anhui) Co., Ltd
Hefei City, Anhui 230611 (CN)**

(72) Inventors:
• **YANG, Zhenhua Fish**
**Hefei City, Anhui, 230611 (CN)**
• **SHUAI, Xishi Ethan**
**Hefei City, Anhui, 230611 (CN)**
• **MA, Guoan**
**Hefei City, Anhui, 230611 (CN)**

(74) Representative: **Vossius & Partner
Patentanwälte Rechtsanwälte mbB
Siebertstrasse 3
81675 München (DE)**

(54) **ELECTRICAL SYSTEM OF ELECTRIC VEHICLE, AND METHODS FOR CONTROLLING POWER-ON PROCESS AND POWER-OFF PROCESS OF ELECTRIC VEHICLE**

(57)    The disclosure relates to the field of vehicle control technologies, and in particular to an electrical system of an electric vehicle, and methods for controlling a power-on process and a power-off process of an electric vehicle. According to an aspect of the disclosure, an electrical system of an electric vehicle is provided. The system includes: a main controller; a low-voltage battery pack; a high-voltage bus and a negative bus; a high-voltage unit including a high-voltage battery pack connected to the high-voltage bus and to the negative bus; a DC-DC converter connected between the high-voltage bus and the negative bus; and a precharging capacitor connected between the high-voltage bus and the negative bus, wherein the main controller is configured to perform the following operations: A. enabling the low-voltage battery pack to charge the precharging capacitor to a target precharging voltage through the DC-DC converter in response to a power-on event; and B. sending to the high-voltage unit a first command to connect a positive electrode of the high-voltage battery pack to the high-voltage bus after it is determined that a bus voltage reaches the target precharging voltage.

*FIG. 1*

EP 4 574 521 A1

## Description

Technical Field

The disclosure relates to the field of vehicle control technologies, and in particular to an electrical system of an electric vehicle, and methods for controlling a power-on process and a power-off process of an electric vehicle.

Background Art

The control of power-on and power-off processes is a crucial control aspect of electric vehicles, which involves energy management and safe operation of the vehicles. In a typical power-on process, after being woken up, a vehicle control unit (VCU) wakes up devices such as a DC-DC converter and a battery management system (BMS). After the devices succeed in self-checking, the vehicle control unit requests the BMS to close a main relay. The BMS then successively closes a main negative relay and a precharging relay. When it is detected that a bus voltage reaches a threshold, the BMS closes a main positive relay and opens the precharging relay. As such, the high-voltage power-on process is completed. A power-off process of the vehicles includes shutting down various onboard electrical devices, disconnecting a battery from an electrical load, and other operations, to avoid safety problems such as battery over-discharge or electrical fires.

Summary

An objective of the disclosure is to provide an electrical system of an electric vehicle, and methods for controlling a power-on process and a power-off process of an electric vehicle, which may enhance the efficiency, speed, and safety of the power-on process and the power-off process.

According to an aspect of the disclosure, an electrical system of an electric vehicle is provided. The system includes:

> a main controller;
> a low-voltage battery pack;
> a high-voltage bus and a negative bus;
> a high-voltage unit including a high-voltage battery pack connected to the high-voltage bus and to the negative bus;
> a DC-DC converter connected between the high-voltage bus and the negative bus; and
> a precharging capacitor connected between the high-voltage bus and the negative bus,
> where the main controller is configured to perform the following operations:

>> A. enabling the low-voltage battery pack to charge the precharging capacitor to a target precharging voltage through the DC-DC converter in response to a power-on event; and
>> B. sending to the high-voltage unit a first command to connect a positive electrode of the high-voltage battery pack to the high-voltage bus when it is determined that a bus voltage reaches the target precharging voltage.

Optionally, in the electrical system, the main controller is further configured to perform the following operations:

> C. sending to the high-voltage unit a second command to disconnect the positive electrode of the high-voltage battery pack from the high-voltage bus in response to a power-off event; and
> D. discharging the precharging capacitor to reduce the bus voltage to a target discharging voltage or below after it is determined that the positive electrode of the high-voltage battery pack is disconnected from the high-voltage bus.

Optionally, in the electrical system, the high-voltage unit includes:

> a local controller;
> a main positive relay connected between the high-voltage bus and the positive electrode of the high-voltage battery pack and controlled by the local controller; and a main negative relay connected between the negative bus and a negative electrode of the high-voltage battery pack and controlled by the local controller.

Optionally, in the electrical system, the local controller is configured to, in response to the first command, close the main positive relay to connect the positive electrode of the high-voltage battery pack to the high-voltage bus when a difference between the bus voltage and a voltage of the high-voltage battery pack is less than a set threshold.

Optionally, in the electrical system, the local controller is further configured to send to the main controller a first message indicating that the main positive relay is in a closed state.

Optionally, in the electrical system, the main controller is further configured to, in operation A, send to the local controller a third command to close the main negative relay after the low-voltage battery pack starts charging the precharging capacitor; and the local controller is further configured to, in response to the third command, enable the main negative relay to be in a closed state, and send to the main controller a second message indicating the bus voltage.

Optionally, in the electrical system, the local controller is a battery management system.

Optionally, in the electrical system, the main controller is further configured to perform operation C as follows:

C1. sending to the local controller a third command to perform insulation detection in response to a power-off event; and
C2. simultaneously or sequentially stopping operation of the DC-DC converter and sending the second command to the high-voltage unit, when it is determined that an insulated state is normal.

Optionally, in the electrical system, the main controller is further configured to perform the following operations:
E. sending to an onboard device a fourth command to enter a shutdown state over an in-vehicle network after it is determined that the bus voltage is reduced to the target discharging voltage or below.

According to another aspect of the disclosure, a method for controlling a power-on process of an electric vehicle is provided. The electric vehicle includes an electrical system. The electrical system includes a main controller, a low-voltage battery pack, a high-voltage bus, a negative bus, a high-voltage unit, a DC-DC converter connected between the high-voltage bus and the negative bus, and a precharging capacitor connected between the high-voltage bus and the negative bus. The high-voltage unit includes a high-voltage battery pack connected to the high-voltage bus and to the negative bus. The method includes:

A'. enabling, by the main controller, the low-voltage battery pack to charge the precharging capacitor to a target precharging voltage through the DC-DC converter in response to a power-on event; and
B'. sending, by the main controller, to the high-voltage unit a first command to connect a positive electrode of the high-voltage battery pack to the high-voltage bus when it is determined that a bus voltage reaches the target precharging voltage.

Optionally, in the method, the high-voltage unit further includes a local controller, a main positive relay connected between the high-voltage bus and the positive electrode of the high-voltage battery pack and controlled by the local controller, and a main negative relay connected between the negative bus and a negative electrode of the high-voltage battery pack and controlled by the local controller. The method further includes:
C'. in response to the first command, closing, by the local controller, the main positive relay to connect the positive electrode of the high-voltage battery pack to the high-voltage bus when a difference between the bus voltage and a voltage of the high-voltage battery pack is less than a set threshold.
Optionally, the method further includes:

D'. sending, by the local controller, to the main controller a first message indicating that the main positive relay is in a closed state; and
E'. stopping, by the main controller, the low-voltage battery pack from charging the precharging capacitor in response to the first message.

Optionally, in the method, in step A', the main controller sends to the local controller a third command to close the main negative relay after the low-voltage battery pack starts charging the precharging capacitor, and the local controller, in response to the third command, enables the main negative relay to be in a closed state, and sends to the main controller a second message indicating the bus voltage.
According to still another aspect of the disclosure, a method for controlling a power-off process of an electric vehicle is provided. The electric vehicle includes an electrical system. The electrical system includes a main controller, a low-voltage battery pack, a high-voltage bus, a negative bus, a high-voltage unit, a DC-DC converter connected between the high-voltage bus and the negative bus, and a precharging capacitor connected between the high-voltage bus and the negative bus. The high-voltage unit includes a high-voltage battery pack connected to the high-voltage bus and to the negative bus. The method includes:

A". sending, by the main controller, to the high-voltage unit a second command to disconnect the positive electrode of the high-voltage battery pack from the high-voltage bus in response to a power-off event; and
B". discharging, by the main controller, the precharging capacitor to reduce the bus voltage to a target discharging voltage or below after it is determined that the positive electrode of the high-voltage battery pack is disconnected from the high-voltage bus.

Optionally, in the method, the high-voltage unit further includes a local controller, a main positive relay connected between the high-voltage bus and the positive electrode of the high-voltage battery pack and controlled by the local controller, and a main negative relay connected between the negative bus and a negative electrode of the high-voltage battery pack and controlled by the local controller. Step A" includes:

A"1. sending, by the main controller, to the local controller a third command to perform insulation detection in response to a power-off event; and
A"2. simultaneously or sequentially stopping, by the main controller, operation of the DC-DC converter and sending the second command to the high-voltage unit, when it is determined that an insulated state is normal.

Optionally, the method further includes:
C". sending, by the main controller, to an onboard device a fourth command to enter a shutdown state over an in-vehicle network after it is determined that the bus voltage is reduced to the target discharging voltage or below.

In some embodiments of the disclosure, capacitor charging is used as a precharging manner, thereby improving the charging speed and efficiency, and making it easier to integrate a precharging component into a device such as a power electronic unit. In some other embodiments, in addition to the target precharging voltage, the bus voltage after precharging is also compared with an output voltage of the high-voltage battery pack. Such "double" checking reduces the possibility that a large impulse current is generated when the high-voltage battery pack is connected to the high-voltage bus. Furthermore, in some embodiments, insulation detection is performed during the power-off process, thereby improving the safety of a vehicle system.

Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:

> FIG. 1 is a schematic diagram of an electrical system of an electric vehicle according to an embodiment of the disclosure;
> FIG. 2 is a flowchart of a method for controlling a power-on process of an electric vehicle according to another embodiment of the disclosure;
> FIG. 3 is a flowchart of a process of closing a main positive relay according to still another embodiment of the disclosure;
> FIG. 4 is a flowchart of a method for controlling a power-off process of an electric vehicle according to yet another embodiment of the disclosure; and
> FIG. 5 is a flowchart of a discharging process according to still yet another embodiment of the disclosure.

Detailed Description of Embodiments

The disclosure is described below more comprehensively with reference to the accompanying drawings in which schematic embodiments of the disclosure are shown. However, the disclosure may be implemented in different forms, and should not be construed as being limited to the embodiments provided herein. The embodiments provided above are intended to make the disclosure of this specification comprehensive and complete, to more comprehensively convey the scope of protection of the disclosure to those skilled in the art.

In this specification, the terms such as "include" and "comprise" indicate that in addition to the units and steps that are directly and explicitly described in the specification and claims, other units and steps that are not directly or explicitly described are not excluded in the technical solutions of the disclosure.

In this specification, the term "connect" refers to an electrical connection for power transmission or a communication connection for signal transmission between two or more hardware entities, which includes a direct connection between two hardware entities, and a connection between two hardware entities via another hardware entity.

In this specification, the term "main controller" refers to a controller for controlling one or more functional domains. In some embodiments of the disclosure, the main controller may, for example, be a vehicle control unit (VCU) for coordinating the operation of each controller, to implement driving, braking, energy recovery, and other functions of a vehicle while monitoring the status and safety of the vehicle. An electric vehicle is usually divided into a plurality of functional domains according to functions (for example, a powertrain domain, a chassis domain, a cockpit domain, an autonomous driving domain, a vehicle body domain, etc.). A domain controller communicates with various sensors and actuators over communication networks such as a CAN, a LIN, and MOST, to implement control and management of specific functional domains. In some other embodiments of the disclosure, the domain controller may also be used as the main controller.

Before an electrical system of the electric vehicle starts, it is necessary to stably increase a voltage on a high-voltage side to a particular level, and then switch the electrical system to a high-voltage operating mode, thereby avoiding the impact of a step-up voltage on various components. During the power-on process, the stable increase of voltage on the high-voltage side is usually implemented by means of a precharging resistor. The use of the precharging resistor has disadvantages of high energy consumption, difficulty in miniaturization (a large resistor is required due to the need for a large current), etc. Alternatively, the precharging is implemented by means of a capacitor, which has advantages of fast charging speed, high charging efficiency, easy integration, etc.

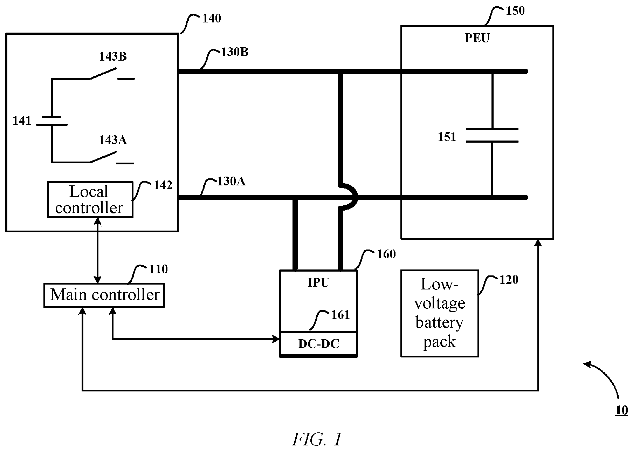

FIG. 1 is a schematic diagram of an electrical system of an electric vehicle according to an embodiment of the disclosure.

An electrical system 10 shown in FIG. 1 includes a main controller 110, a low-voltage battery pack 120, a high-voltage bus 130A, a negative bus 130B, a high-voltage unit 140, a power electronic unit (PEU) 150, and an intelligent power unit (IPU) 160. The high-voltage bus 130A and the negative bus 130B are collectively referred to as a direct-current bus below.

As shown in FIG. 1, the high-voltage unit 140 includes a high-voltage battery pack 141, a local controller 142, and relays 143A, 143B. A positive electrode and a negative electrode of the high-voltage battery pack 141 are respectively connected to the high-voltage bus 130A and the negative bus 130B via the relays 143A, 143B. The relay 143A is also referred to as a main positive relay below since it is connected between the positive electrode of the high-voltage battery pack 141 and the high-voltage bus 130A. In addition, the relay 143B is also referred to as a main negative relay below since it is connected between the negative electrode of the high-voltage battery pack 141 and the negative bus 130B.

The power electronic unit 150 is an integrated drive system, and usually includes components such as an alternating current-direct current converter, a direct current-alternating current inverter, and a motor controller. In the embodiment shown in FIG. 1, the power electronic unit 150 further includes a precharging capacitor 151, and the capacitor is connected between the high-voltage bus 130A and the negative bus 130B.

The intelligent power unit (IPU) 160 is usually configured to implement functions such as motor control and power conversion. In addition, further control modules (such as a programmable logic controller and a microcontroller) may be added according to actual needs, to implement more complex control logic. In some specific implementations, as shown in FIG. 1, the intelligent power unit (IPU) 160 includes a DC-DC converter 161, which is connected between the high-voltage bus 130A and the negative bus 130B and is configured to convert a low-voltage direct current of the low-voltage battery pack 120 into a high-voltage direct current and output the high-voltage direct current to the direct current bus, to charge the precharging capacitor 151.

It should be noted that although the IPU and the PEU differ in function, they overlap and complement each other to some extent. In some specific implementations, the IPU may be integrated with the PEU. However, for some specific application scenarios and vehicle requirements, it may also be necessary to configure both the IPU and the PEU. For example, in high-performance electric vehicles or hybrid vehicles, both the IPU and the PEU may be needed to implement more complex driving modes and control logic.

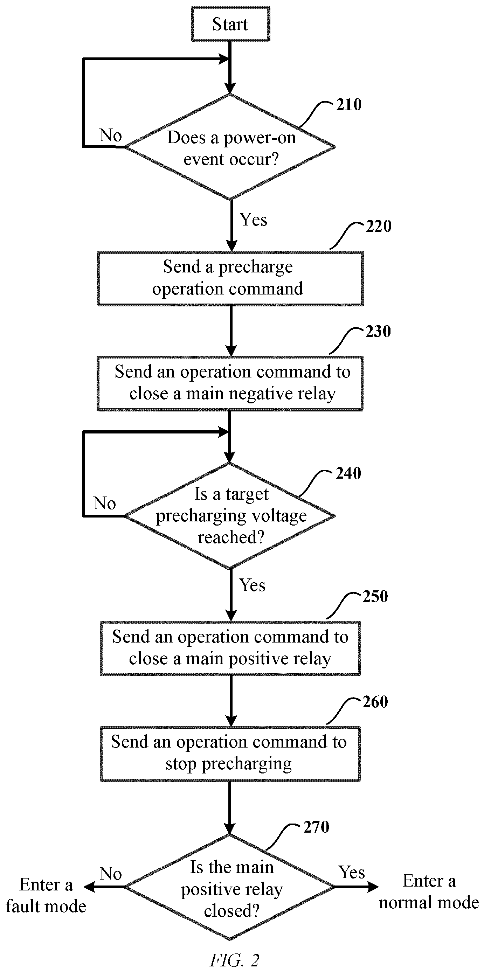

FIG. 2 is a flowchart of a method for controlling a power-on process of an electric vehicle according to another embodiment of the disclosure. For example, the method described below is implemented by the electrical system shown in FIG. 1. However, it should be noted that implementation of the method shown in FIG. 2 is not limited to an electrical system having a specific structure.

The method shown in FIG. 2 starts at step 210. In this step, the main controller 110 determines whether a set type of event (a power-on event) occurs. If the set type of event occurs, the method proceeds to step 220; otherwise, the power-on process is exited. In some vehicles, a power-on request (for example, a user power-on request, a remote control request, and firmware over-the-air (FOTA) may be sent to onboard devices such as a main controller, a battery management system, an intelligent power unit, and a low-voltage battery pack over a vehicle network to wake up the devices. The main controller then determines whether a power-on condition is met based on a state of each onboard device. If the power-on condition is met, the power-on process is performed; otherwise, the power-on process ends. In some specific implementations, when the devices are woken up, it may be considered that the power-on event occurs. In some other specific implementations, when the devices are woken up and the power-on condition is met, it may be considered that the power-on event occurs.

In step 220, the main controller 110 sends a precharge operation command COMMAND_1 to the IPU 160, and the command includes a target precharging voltage $V_{target}$. In response to the command COMMAND_1, the DC-DC converter 161 enters a precharging mode. In this mode, the DC-DC converter 161 converts a direct current from the low-voltage battery pack 120 into a direct current that is substantially equal to the target precharging voltage $V_{target}$, and applies the converted direct current across the precharging capacitor 151.

Generally, the target precharging voltage $V_{target}$ is set to be lower than an output voltage $V_{HBP}$ of the high-voltage battery pack. In some specific implementations, the target precharging voltage $V_{target}$ may be a constant parameter calibrated according to a vehicle model. In some other specific implementations, the target precharging voltage $V_{target}$ may be a dynamically changing parameter, and may be set according to vehicle characteristics (including, for example, the output voltage of the high-voltage battery pack, the output voltage of the low-voltage battery pack, an impulse current that a vehicle device may withstand, etc.). A high target voltage is beneficial for reducing the impulse current, but may prolong charging time; in contrast, a low target voltage shortens charging time but may result in a large impulse current. It has been found through research that if the target precharging voltage is set by using an operating temperature T of the precharging capacitor as a consideration factor, a better balance can be achieved between parameters for example, the target voltage and the charging time, etc., although this factor appears to lack a correlation with the balance between the parameters. For example, the target precharging voltage $V_{target}$ may be determined according to the following formulas:

$$V_{target} = V_{HBP} \times \left( 1 - e^{a \times C(T)} \right) \qquad (1)$$

$$C(T) = C_0 \times \left( 1 + \beta \times (T - T_0) \right) \qquad (2)$$

where $V_{HBP}$ is the output voltage of the high-voltage battery pack, $C(T)$ is a capacitance of the precharging capacitor at the temperature T, $C_0$ is a reference capacitance of the precharging capacitor at a reference temperature $T_0$, and $\alpha$ and $\beta$ are a temperature constant and a capacitance temperature coefficient, respectively, which may be determined based on experiments.

Then, the method proceeds to step 230 in which the main controller 110 sends to the local controller 142 in the high-voltage unit 140 an operation command COMMAND 2 for closing the main negative relay 143B and monitoring the bus voltage (that is, a voltage between the high-voltage bus 130A and the negative bus 130B). Accordingly, in response to the operation command COMMAND_2, the local controller 142 closes the main negative relay 143B and sends a message MESSAGE_1 indicating the bus voltage $V_{BUS}$ to the main controller 110.

It should be noted that steps 220 and 230 may be performed in parallel, or in a reverse order of that shown in FIG. 2.

After step 230, the method shown in FIG. 2 proceeds to step 240. In step 240, the main controller 110 determines whether the bus voltage $V_{BUS}$ uploaded by the local controller 142 reaches the target precharging voltage $V_{target}$. If the bus voltage reaches the target precharging voltage, the method proceeds to step 250; otherwise, step 240 continues to be performed.

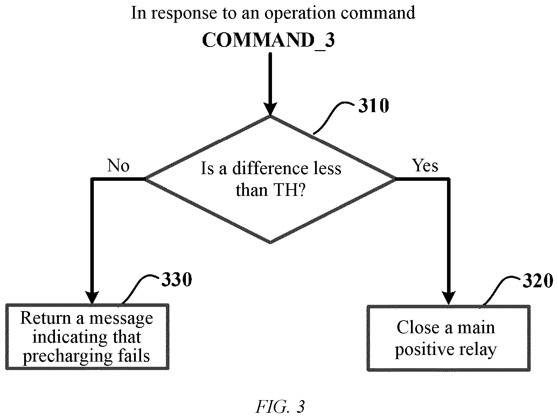

In step 250, the main controller 110 sends to the local controller 142 an operation command COMMAND_3 for closing the main positive relay 143A to start a sub-process of closing the main positive relay, which will be described below with reference to FIG. 3.

After step 250 is performed, the method shown in FIG. 2 proceeds to step 260. In step 260, the main controller 110 sends to the IPU 160 a command COMMAND_4 for stopping a precharge operation. In response to the COMMAND_4, the DC-DC converter 161 may exit the precharging mode.

It should be noted that steps 250 and 260 may be performed in parallel, or in a reverse order of that shown in FIG. 2.

After step 260 is performed, the method shown in FIG. 2 proceeds to step 270. In step 270, the main controller 110 determines, based on a result of the closing operation on the main positive relay performed by the local controller 142, an operating mode for a vehicle to enter. In some specific implementations, if it is determined, based on a message uploaded by the local controller 142, that the main positive relay is in a closed state, the vehicle enters a normal mode; otherwise, the vehicle enters a fault mode.

FIG. 3 is a flowchart of a process of closing a main positive relay according to still another embodiment of the disclosure.

As shown in FIG. 3, in step 310, in response to the operation command COMMAND_3, the local controller 142 compares the bus voltage $V_{BUS}$ with the output voltage $V_{HBP}$ of the high-voltage battery pack 141. If an absolute value $|\Delta V|$ of a difference between the bus voltage $V_{BUS}$ and the output voltage $V_{HBP}$ is less than a set threshold TH, the method proceeds to step 320; otherwise, the method proceeds to step 330.

In step 320, the local controller 142 closes the main positive relay 143A by means of a control signal and returns to the main controller 110 a message MESSAGE 2 indicating that the main positive relay 143A is in a closed state.

In step 330, the local controller 142 returns to the main controller 110 a message MESSAGE_3 indicating that precharging fails and the main positive relay 143A is in an open state.

In some specific implementations, for example, the target precharging voltage $V_{target}$ and the difference $|\Delta V|$ may be constant parameters calibrated according to a vehicle model. In some other specific implementations, the target precharging voltage $V_{target}$ and the difference $|\Delta V|$ may be dynamically changing parameters, and may be set according to vehicle characteristics (including, for example, the output voltage of the high-voltage battery pack, the output voltage of the low-voltage battery pack, and an impulse current that a vehicle device may withstand, etc.).

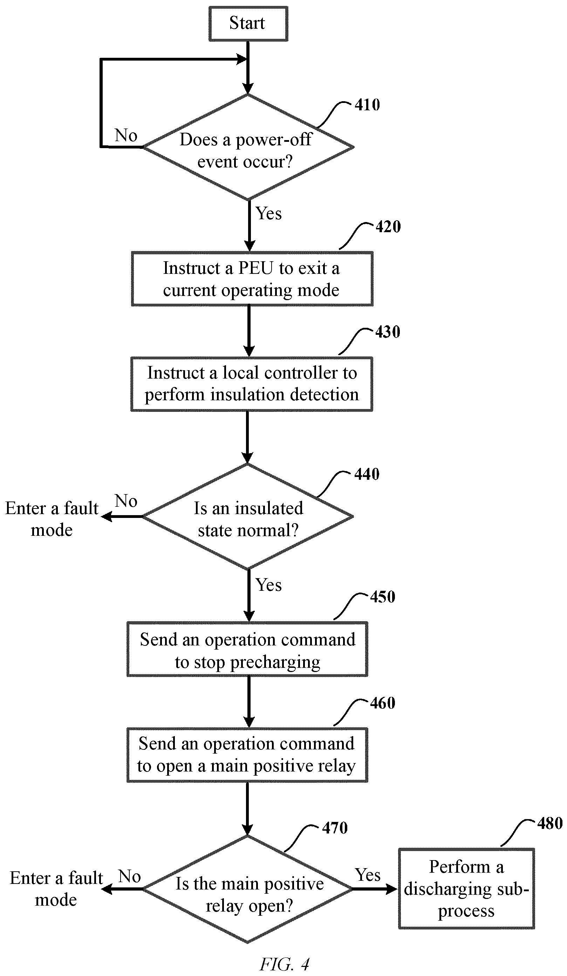

FIG. 4 is a flowchart of a method for controlling a power-off process of an electric vehicle according to yet another embodiment of the disclosure. For example, the method described below is implemented by the electrical system shown in FIG. 1. However, it should be noted that implementation of the method shown in FIG. 4 is not limited to an electrical system having a specific structure.

The method shown in FIG. 4 starts at step 410. In this step, the main controller 110 determines whether a set type of event (a power-off event) occurs. If the set type of event occurs, the method proceeds to step 420; otherwise, the power-off event continues to be monitored. In some specific implementations, when a power-off request is received, it may be considered that the power-off event occurs. In some other specific implementations, when a power-off request is received and a power-on condition is met, it may be considered that the power-off event occurs.

In step 420, the main controller 110 sends to the PEU 150 a command COMMAND_5 for exiting a current operating mode (for example, an operating mode of a drive motor, etc.). Accordingly, in response to the command COMMAND_5, the PEU 150 may exit the current operating mode.

Then, the method proceeds to step 430 in which the main controller 110 sends to the local controller 142 an operation command COMMAND_6 for performing insulation detection. The insulation detection operation is used to determine whether an insulated state of the high-voltage unit is normal, or whether there is a risk of leakage of the high-voltage unit. Accordingly, in response to the operation command COMMAND_6, the local controller 142 performs the insulation detection and returns to the main controller 110 a message MESSAGE 4 including an insulation detection result.

After step 430 is performed, the method shown in FIG. 4 proceeds to step 440. In step 440, the main controller 110 determines whether the insulated state is normal based on the insulation detection result in the message MESSAGE_4. If the insulated state is normal, the method proceeds to step 450; otherwise, the process exits the power-off process and the vehicle enters a fault mode.

It should be noted that steps 430 and 440 for detecting the insulated state are optional, and may be performed in parallel with step 420, or in a reverse order of that shown in FIG. 4.

In step 450, the main controller 110 sends to the IPU 160 a command COMMAND_7 for stopping a precharge operation. In response to the COMMAND_7, the DC-DC converter 161 may exit the precharging mode.

Then, the method proceeds to step 460 in which the main controller 110 sends to the local controller 142 an operation command COMMAND_8 for opening the main positive relay 143A. Accordingly, in response to the command COMMAND_8, the local controller 142 performs an operation for opening the main positive relay 143A and returns to the main controller 110 a message MESSAGE_5 including an operation result.

It should be noted that steps 450 and 460 may be performed in parallel, or in a reverse order of that shown in FIG. 4.

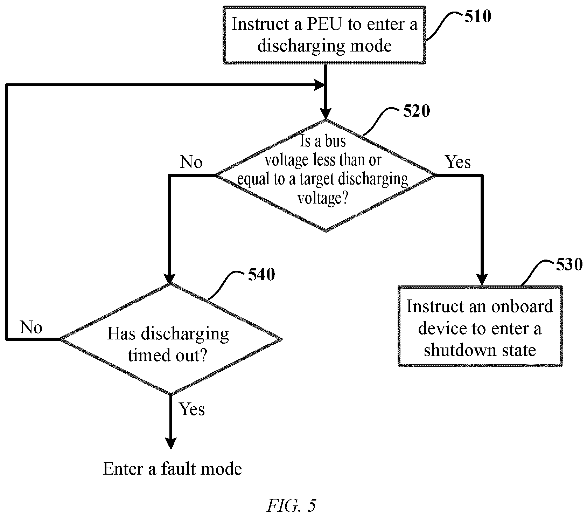

After step 460 is performed, the method shown in FIG. 4 proceeds to step 470. In step 470, the main controller 110 determines whether the main positive relay 143A is in an open state based on the operation result included in the message MESSAGE_5. If the main positive relay is open, the method proceeds to step 480 to execute a discharging sub-process described below with reference to FIG. 5; otherwise, the process exits the power-off process and the vehicle enters a fault mode.

FIG. 5 is a flowchart of a discharging process according to still yet another embodiment of the disclosure.

As shown in FIG. 5, in step 510, the main controller 110 sends to the PEU 150 a command COMMAND_9 for enter a discharging mode. Accordingly, in response to the command COMMAND_9, the PEU 150 discharges the precharging capacitor 151.

Then, the method proceeds to step 520 in which the main controller 110 compares the bus voltage $V_{BUS}$ reported by the local controller 142 with a target discharging voltage $V'_{target}$. If the bus voltage $V_{BUS}$ is less than or equal to the target discharging voltage $V'_{target}$, the method proceeds to step 530; otherwise, the method proceeds to step 540. In some specific implementations, the target discharging voltage $V'_{target}$ may be set to a safety voltage specified by safety regulations.

In step 530, the main controller 110 sends to an onboard device over an in-vehicle network a fourth command COMMAND_10 for entering a shutdown state.

In step 540, the main controller 110 determines whether time elapsed from the start of discharging exceeds a set time period. If the time exceeds the set time period, the vehicle enters the fault mode; otherwise, the method returns to step 520.

Those skilled in the art can understand that various illustrative logical blocks, modules, circuits, and algorithm steps described in this specification may be implemented as hardware, computer software, or a combination thereof.

To demonstrate interchangeability between the hardware and the software, various illustrative parts, blocks, modules, circuits, and steps above have been described comprehensively based on their functionalities. Whether to implement such functionalities in the form of hardware or software depends on specific application and design constrains imposed on an overall system. Those skilled in the art may implement the described functionalities for specific and particular application based on manners of change. However, determination of such an implementation should not be understood as a departure from the scope of the disclosure.

Although only some specific embodiments of the disclosure are described, those of ordinary skill in the art should understand that the disclosure may be implemented in many other forms without departing from the essence and scope of the disclosure. Therefore, the presented examples and implementations are deemed as illustrative rather than restrictive, and without departing from the spirit and scope of the disclosure defined by the appended claims, the disclosure may cover various modifications and substitutions.

The embodiments and examples proposed herein are provided to describe as adequately as possible embodiments according to the technology and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

**Claims**

1. An electrical system of an electric vehicle, comprising:

   a main controller;
   a low-voltage battery pack;
   a high-voltage bus and a negative bus;
   a high-voltage unit comprising a high-voltage battery pack connected to the high-voltage bus and to the negative bus;
   a DC-DC converter connected between the high-voltage bus and the negative bus; and
   a precharging capacitor connected between the high-voltage bus and the negative bus,
   wherein the main controller is configured to perform the following operations:

      A. enabling the low-voltage battery pack to charge the precharging capacitor to a target precharging voltage through the DC-DC converter in response to a power-on event; and

B. sending to the high-voltage unit a first command to connect a positive electrode of the high-voltage battery pack to the high-voltage bus when it is determined that a bus voltage reaches the target precharging voltage.

2. The electrical system according to claim 1, wherein the main controller is further configured to perform the following operations:

C. sending to the high-voltage unit a second command to disconnect the positive electrode of the high-voltage battery pack from the high-voltage bus in response to a power-off event; and
D. discharging the precharging capacitor to reduce the bus voltage to a target discharging voltage or below after it is determined that the positive electrode of the high-voltage battery pack is disconnected from the high-voltage bus.

3. The electrical system according to claim 1 or 2, wherein the high-voltage unit comprises:

a local controller;
a main positive relay connected between the high-voltage bus and the positive electrode of the high-voltage battery pack and controlled by the local controller; and
a main negative relay connected between the negative bus and a negative electrode of the high-voltage battery pack and controlled by the local controller.

4. The electrical system according to claim 3, wherein the local controller is configured to, in response to the first command, close the main positive relay to connect the positive electrode of the high-voltage battery pack to the high-voltage bus when a difference between the bus voltage and a voltage of the high-voltage battery pack is less than a set threshold.

5. The electrical system according to claim 3 or 4, wherein the local controller is further configured to send to the main controller a first message indicating that the main positive relay is in a closed state.

6. The electrical system according to any one of claims 3 to 5, wherein the main controller is further configured to, in operation A, send to the local controller a third command to close the main negative relay after the low-voltage battery pack starts charging the precharging capacitor; and the local controller is further configured to, in response to the third command, enable the main negative relay to be in a closed state, and send to the main controller a second message indicating the bus voltage.

7. The electrical system according to any one of claims 3 to 6, wherein the local controller is a battery management system.

8. The electrical system according to any one of claims 3 to 7, wherein the main controller is configured to perform operation C as follows:

C1. Sending to the local controller a third command to perform insulation detection in response to a power-off event; and
C2. Simultaneously or sequentially stopping operation of the DC-DC converter and sending the second command to the high-voltage unit, when it is determined that an insulated state is normal.

9. A method for controlling a power-on process of an electric vehicle, wherein the electric vehicle comprises an electrical system, the electrical system, preferably the system according to any one of claims 1 to 8 comprises a main controller, a low-voltage battery pack, a high-voltage bus, a negative bus, a high-voltage unit, a DC-DC converter connected between the high-voltage bus and the negative bus, and a precharging capacitor connected between the high-voltage bus and the negative bus, and the high-voltage unit comprises a high-voltage battery pack connected to the high-voltage bus and to the negative bus, the method comprising:

A'. enabling, by the main controller, the low-voltage battery pack to charge the precharging capacitor to a target precharging voltage through the DC-DC converter in response to a power-on event; and
B'. sending, by the main controller, to the high-voltage unit a first command to connect a positive electrode of the high-voltage battery pack to the high-voltage bus when it is determined that a bus voltage reaches the target precharging voltage.

10. A method for controlling a power-off process of an electric vehicle, preferably in combination with the method according to claim 9, wherein the electric vehicle comprises an electrical system, preferably the system according to any one of claims 1 to 8 the electrical system comprises a main controller, a low-voltage battery pack, a high-voltage bus, a negative bus, a high-voltage unit, a DC-DC converter connected between the high-voltage bus and the negative bus, and a precharging capacitor connected between the high-voltage bus and the negative bus, and the high-voltage unit comprises a high-voltage battery pack connected to the high-voltage bus and to the negative bus, the method comprising:

A". sending, by the main controller, to the high-voltage unit a second command to disconnect the positive electrode of the high-voltage battery pack from the high-voltage bus in response to a power-off event; and

B". discharging, by the main controller, the precharging capacitor to reduce the bus voltage to a target discharging voltage or below after it is determined that the positive electrode of the high-voltage battery pack is disconnected from the high-voltage bus.

FIG. 1

Start

Does a power-on
event occur? — 210

No

Yes

Send a precharge
operation command — 220

Send an operation command to
close a main negative relay — 230

Is a target
precharging voltage
reached? — 240

No

Yes

Send an operation command to
close a main positive relay — 250

Send an operation command to
stop precharging — 260

Is the main
positive relay
closed? — 270

No → Enter a
fault mode

Yes → Enter a
normal mode

*FIG. 2*

In response to an operation command
**COMMAND_3**

Is a difference less than TH? 310

No

Yes

Return a message indicating that precharging fails 330

Close a main positive relay 320

*FIG. 3*

Start

Does a power-off event occur? 410

No

Yes

Instruct a PEU to exit a current operating mode 420

Instruct a local controller to perform insulation detection 430

Is an insulated state normal? 440

No — Enter a fault mode

Yes

Send an operation command to stop precharging 450

Send an operation command to open a main positive relay 460

Is the main positive relay open? 470

No — Enter a fault mode

Yes — Perform a discharging sub-process 480

*FIG. 4*

Instruct a PEU to enter a discharging mode ⟋510

Is a bus voltage less than or equal to a target discharging voltage? ⟋520

No

Yes

Instruct an onboard device to enter a shutdown state ⟋530

Has discharging timed out? ⟋540

No

Yes

Enter a fault mode

FIG. 5

**EP 4 574 521 A1**

Europäisches Patentamt
European Patent Office
Office européen des brevets

# EUROPEAN SEARCH REPORT

Application Number

EP 24 21 6611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/269718 A1 (ISAKSSON BJÖRN [SE]) 27 August 2020 (2020-08-27) | 1-7,9,10 | INV.<br>B60L3/00 |
| Y | * paragraphs [0002], [0034] - [0045], [0049] - [0057]; figures 1-3 * | 8 | B60L3/04<br>H02H9/00 |
| X | WO 2021/139782 A1 (GREAT WALL MOTOR CO LTD [CN]) 15 July 2021 (2021-07-15) | 1-7,9,10 | |
| A | * pages 5-7; figures 1,3 * | 8 | |
| X | WO 2021/031886 A1 (GREAT WALL MOTOR CO LTD [CN]) 25 February 2021 (2021-02-25) | 1-7,9,10 | |
| A | * pages 8-14; figures 1-7 * | 8 | |
| X | JP 2010 124535 A (TOYOTA MOTOR CORP) 3 June 2010 (2010-06-03) | 1-10 | |
| Y | * paragraphs [0021], [0022], [0050], [0061] - [0063], [0102] - [0106], [0135] - [0149]; figures 1, 2, 5, 9, 12 * | 8 | |

TECHNICAL FIELDS
SEARCHED (IPC)

B60L
H02H

The present search report has been drawn up for all claims

| Place of search | Date of completion of the search | Examiner |
|---|---|---|
| The Hague | 13 May 2025 | Bronski, Bartlomiej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 574 521 A1**

## ANNEX TO THE EUROPEAN SEARCH REPORT
## ON EUROPEAN PATENT APPLICATION NO.

EP 24 21 6611

13-05-2025

| Patent document cited in search report | Publication date | Patent family member(s) | | Publication date |
|---|---|---|---|---|
| US 2020269718 A1 | 27-08-2020 | CN | 111315610 A | 19-06-2020 |
| | | EP | 3482994 A1 | 15-05-2019 |
| | | US | 2020269718 A1 | 27-08-2020 |
| | | WO | 2019091465 A1 | 16-05-2019 |
| WO 2021139782 A1 | 15-07-2021 | CN | 112455231 A | 09-03-2021 |
| | | WO | 2021139782 A1 | 15-07-2021 |
| WO 2021031886 A1 | 25-02-2021 | CN | 111532133 A | 14-08-2020 |
| | | WO | 2021031886 A1 | 25-02-2021 |
| JP 2010124535 A | 03-06-2010 | JP | 5187152 B2 | 24-04-2013 |
| | | JP | 2010124535 A | 03-06-2010 |

EPO FORM P0459

For more details about this annex : see Official Journal of the European Patent Office, No. 12/82